# EUROPEAN PATENT APPLICATION

(11) **EP 4 186 949 A1**
(43) Date of publication of application: **31.05.2023**
(21) Application number: 20957728.7
(22) Date of filing: 16.10.2020
(51) Int. Cl.: C09D 5/00, C09D 163/00, C09D 183/04, C09D 7/61

(54) **OPTICAL PRODUCT WITH REDUCED INTERFERENCE FRINGES, AND COATING AGENT COMPOSITION THEREFOR**

(71) Applicant: Nippon Fine Chemical Co., Ltd., Osaka-shi, Osaka 541-0051 (JP)
(72) Inventor: OISHI, Kou, Kakogawa-shi, Hyogo 675-0011 (JP); UENO, Toshiya, Kakogawa-shi, Hyogo 675-0011 (JP); MIYAMOTO, Yoshiaki, Kakogawa-shi, Hyogo 675-0011 (JP)
(74) Representative: Eisenführ Speiser
(86) International application number: PCT/JP2020/039106
(87) International publication number: WO 2022/079899

(57) **Abstract**

The present invention provides a coating agent composition capable of making interference fringes inconspicuous and suppressing the generation of cracks during the production of a hard coat layer without blending fine particles of metal oxides such as zirconium oxide and titanium oxide in an optical article in which a hard coat layer or a functional layer including a primer layer and a hard coat layer is formed on a plastic layer having a high refractive index. The coating agent composition comprises a trifunctional silane coupling agent and a bifunctional silane coupling agent in a solid content ratio of 95:5 to 10:90.

## Description

### [Technical Field]

The present invention relates to an optical article such as a spectacle lens, particularly an optical article in which the generation of interference fringes is suppressed, and a coating agent composition used for such an optical article.

### [Background]

Optical articles such as spectacle lenses have a laminated structure in which a glass or plastic substrate is coated with an antireflection layer, an antifouling layer, or the like. Plastic substrates are often used to reduce the weight of spectacles, but since the surface of the plastic substrate is easily damaged, a hard coat layer is formed to protect the surface. In order to impart excellent optical properties to an optical article having such a laminated structure, it is required to appropriately set the thickness and refractive index of each member.

In recent years, there has been a demand for thinner and lighter lenses, and in order to achieve this, it is necessary to increase the refractive index of the plastic substrate. At present, those with a refractive index of 1.60 are the mainstream, but there are those with a maximum refractive index of 1.80. When the refractive index of the lens is increased, when a hard coat layer having a thickness of several µm is formed, there is a problem that interference fringes are occurred due to the difference in the refractive index and uneven film thickness.

Patent Document 1 describes that the problem that reduction in visibility is caused by the occurrence of interference fringes due to the difference in refractive index between a transparent substrate film such as a PET film and a transparent hard coat layer and subtle variations in thickness is solved by blending fine particles of metal oxides such as zirconium oxide and titanium oxide in a hard coating agent as a high refractive index agent and matching the reflectance to the reflectance of the easy-adhesion layer of the PET film to eliminate interference fringes.

However, since fine particles of metal oxides such as zirconium oxide and titanium oxide are expensive, there is a problem of high production costs.

Patent Document 2 discloses a spectacle lens in which a functional layer including a hard coat layer with a constant refractive index and a primer layer with a constant refractive index is formed on a plastic substrate. In order to reduce the thickness of the lens, it is necessary to increase the refractive index of the plastic substrate, which causes the problem that interference fringes occur due to the difference in refractive index and uneven film thickness when the hard coat thin film is formed. Therefore, Patent Document 2 proposes setting the thickness T of the functional layer to a range of 9.1 to 100 µm to suppress the occurrence of interference fringes by. Furthermore, it is described that the occurrence of interference fringes can be further suppressed by increasing or equalizing or decreasing or equalizing the values for the refractive indices of the lens substrate, the primer layer, and the hard coat layer in this order.

However, when the hard coat layer becomes thicker, there is a problem that cracks generate in the hard coat layer during production.

Patent Document 3 discloses a spectacle lens having a lens substrate and a hard coat layer, wherein the hard coat layer is obtained by curing a curable composition comprising inorganic oxide particles, a silane coupling agent, and a polyfunctional compound of more than 40% by mass and 60% by mass or less in matrix components. In this spectacle lens, crack generation during production is suppressed by setting the film thickness of the hard coat layer to 10 µm or more and 50 µm or less.

However, when the content of the polyfunctional epoxy compound exceeds 40%, there is a problem that sufficient hardness cannot be obtained.

### [Related document]

### [Patent document]

[Patent Document 1] JP2009-265590A1
[Patent Document 2] Japanese patent No. 5464846
[Patent Document 3] WO 2015/163464

### [Summary of the Invention]

### [Problem to be solved by the Invention]

In order to increase the refractive index of the primer layer, if fine particles of metal oxide such as zirconium oxide and titanium oxide are blended as in Patent Document 1, not only the production cost of the primer layer increases, but also the relationship with the refractive index of the layer formed thereon must also be considered. Further, as in Patent Document 2, if the thickness of the hard coat layer is increased, cracks are likely to generate during production, and as in Patent Document 3, if the content of the epoxy compound is increased, there is a problem that scratch resistance reduces.

Accordingly, an object of the present invention is to make interference fringes inconspicuous and to suppress the generation of cracks during the production of a hard coat layer without blending a high refractive index agent, fine particles of metal oxide such as zirconia, titania, and the like in an optical article wherein a hard coat layer of a functional layer of a hard coat layer comprising a primer layer is formed on a plastic layer having a high refractive index.

### [Means for solving the problem]

The present invention suppresses the total thickness of at least the hard coat layer and the primer layer to reduce the occurrence of interference fringes, and incorporates a mixture of a trifunctional silane coupling agent and a bifunctional silane coupling agent in the hard coat layer to suppress crack generation is suppressed during production.

Materials for the plastic substrate that can be used in the present invention include, for example, diallyl carbonate, polycarbonate, polyurethane, polythiourethane, episulfide (refractive index: 1.40 to 1.84).

Materials for the primer layer that can be used in the present invention include, for example, polyurethane-based resins, polyester-based resins, acrylic resins, and epoxy resins.

The primer layer can be formed on the plastic substrate using a known method such as dip coating, die coating, flow coating and gravure coating.

Hard coat layers that can be used in the present invention is formed using a coating agent composition prepared by blending an epoxy group-containing silane coupling agent, an inorganic oxide such as silica particles, a polyfunctional epoxy, and the like.

The hard coat layer can be formed on the plastic substrate using a known method such as dip coating, die coating, flow coating and gravure coating.

The epoxy resin used in the hard coat layer of the present invention is preferably a compound having two or more epoxy groups from the viewpoint of maintaining hardness, and examples thereof include aliphatic epoxy compounds, alicyclic epoxy compounds, and aromatic epoxy compounds. Examples of aliphatic epoxy compounds include 1,6-hexanediol diglycidyl ether, ethylene glycol diglycidyl ether, diethylene glycol diglycidyl ether, triethylene glycol diglycidyl ether, tetraethylene glycol diglycidyl ether, nonaethylene glycol diglycidyl ether, propylene glycol diglycidyl ether, dipropylene glycol diglycidyl ether, tripropylene glycol diglycidyl ether, tetrapropylene glycol diglycidyl ether, nonapropylene glycol diglycidyl ether, neopentyl glycol diglycidyl ether, trimethylolpropane diglycidyl ether, trimethylol propane triglycidyl ether, glycerol diglycidyl ether, glycerol triglycidyl ether, diglycerol diglycidyl ether, diglycerol triglycidyl ether, diglycerol tetraglycidyl ether, pentaerythritol diglycidyl ether, pentaerythritol triglycidyl ether, pentaerythritol tetraglycidyl ether, dipentaerythritol tetraglycidyl ether, sorbitol tetraglycidyl ether and the like. Examples of alicyclic epoxy compounds include 3,4-epoxycyclohexylmethyl-3',4'-epoxycyclohexanecarboxylate, isophoronediol diglycidyl ether, bis-2,2-hydroxycyclohexylpropane diglycidyl ether, and the like. Examples of aromatic epoxy compounds include resorcin diglycidyl ether, bisphenol A diglycidyl ether, bisphenol F diglycidyl ether, bisphenol S diglycidyl ether, orthophthalic acid diglycidyl ester, phenol novolac polyglycidyl ether, cresol novolak polyglycidyl ether, and the like.

The epoxy group-containing silane coupling agent used in the hard coat layer of the present invention is a combination of one species or two or more species selected from the group consisting of (A) Glycidoxyalkyltrialkoxysilane (trifunctional silane coupling agent) selected from the group consisting of glycidoxymethyltrimethoxysilane, glycidoxymethyltriethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltrimethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl) ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane; and (B) Glycidoxydialkyldialkoxysilanes (bifunctional silane coupling agents) selected from the group consisting of glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylmethyldiethoxysilane, α-glycidoxypropylmethyldimethoxysilane, a-glycidoxypropylmethyldiethoxysilane, β-glycidoxypropylmethyldimethoxysilane, β-glycidoxypropylmethyl diethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysilane, γ-glycidoxypropylvinyldiethoxysilane, γ-glycidoxypropylphenyldimethoxysilane and γ-glycidoxypropylphenyldiethoxysilane. It can also be a mixture of species selected from trifunctional silane coupling agents and species selected from bifunctional silane coupling agents.

In the present invention, when a mixture of species selected from trifunctional silane coupling agents and species selected from bifunctional silane coupling agents is used as an epoxy group-containing silane coupling agent, the solid content ratio between the trifunctional silane coupling agent and the bifunctional silane coupling agent (trifunctional silane coupling agent:bifunctional silane coupling agent) is preferably 95:5 to 10:90, more preferably 90:10 to 10:90.

As a curing catalyst for the coating agent composition of the present invention, cationic cure catalysts such as aluminum (III) acetylacetonate [or aluminum tris(acetylacetonate)], titanium (IV) acetylacetonate [or titanium tetra(acetylacetonate)], zirconium (IV) acetylacetonate [or zirconium tetra(acetylacetonate)] are preferred.

The amount of the curing catalyst added is preferably 0.5 to 5 parts by mass, more preferably 1 to 3 parts by mass, per 100 parts by mass of the coating agent composition of the present invention.

Examples of inorganic oxides used in the hard coat layer of the present invention include particles of zinc oxide (ZnO), silicon dioxide (SiO₂), titanium oxide (TiO₂), zirconium oxide (ZrO₂), tin oxide (SnO₂), and the like. Silicon dioxide is preferred, but these may be used alone or in combination with two or more inorganic oxides.

In the optical article of the present invention, an inorganic or organic antireflection layer can be further formed on the hard coat layer, if desired.

In the optical article of the present invention, if necessary, an antifouling layer can be formed on the antireflection layer. The antifouling layer has a function of imparting water repellency and oil repellency to the surface of the optical article, and is, for example, a layer made of a fluorine-containing organosilicon compound.

### [Effects of the Invention]

According to the present invention, since the hard coat layer comprises a mixture of a trifunctional silane coupling agent and a bifunctional silane coupling agent, it is possible to suppress the generation of cracks during production even when the film thickness of the hard coat layer is increased in order to reduce interference fringes.

### [Mode for Carrying Out the Invention]

The optical article of the present invention comprises at least a plastic substrate and a hard coat layer formed on the plastic substrate. In particular, in the optical article of the present invention, the plastic substrate has a refractive index of 1.40 to 1.84, and the hard coat layer has a thickness of 23 µm or less, for example, 10 to 23 µm, preferably 15 to 20 µm, wherein the hard coat layer comprises a mixture of a trifunctional silane coupling agent and a bifunctional silane coupling agent.

The optical article of the present invention may have a primer layer on the plastic substrate. The refractive index of the primer layer at that time is preferably in a range of 1.45 to 1.67.

### [Examples]

Hereinafter, the present invention will be described with reference to Examples in order to explain the present invention, but the present invention is not limited to these examples.

### [Hard coat liquid composition components]

A component: metal oxide
   A-I: Silica sol dispersed in Water (Snowtex O: manufactured by Nissan Chemical Co., Ltd., etc.)
   A-2: Silica sol dispersed in Organic solvent (methanol silica sol: manufactured by Nissan Chemical Industries, etc.)
B component: epoxy group-containing silane coupling agent
   B-1: γ-glycidoxypropyltrimethoxysilane (GPTMS)
   B-2: γ-glycidoxypropyltriethoxysilane (GPTES)
   B-3: γ-glycidoxypropyl(methyl)dimethoxysilane (GPDMS)
   B-4: γ-glycidoxypropyl(methyl)diethoxysilane (GPDES)
C component: polyfunctional epoxy compound
   JER827 (manufactured by Mitsubishi Chemical Corporation)
D component: leveling agent
   SH28PA (manufactured by Dow Corning Toray Co., Ltd.)
E component: curing catalyst
   E-1: aluminum tris(acetylacetonate)
   E-2: itaconic acid
F component: solvent
   F-1: methanol
   F-2: acetylacetone
   F-3: propylene glycol monomethyl ether

### Example 1

Added were 16.2 parts by mass of A-1 and 21.6 parts by mass of A-2 as components A, and 49.2 parts by mass of B-1 and 2.3 parts by mass of B-3 as components B, and stirred this at 40°C for 2 hours. To this, added were 15.0 parts by mass of F-1 and 1.8 parts by mass of F-2 as component F, and 2.5 parts by mass of component C, 1.0 part by mass of component D, and 2.1 parts by mass of component E-1. Thereafter, the solvent was recovered to obtain a coating liquid having a solid concentration of 60%.

Using this coating liquid, lenses with different refractive indices were dip-coated, pre-dried at 80°C for 10 minutes, and then thermally cured at 120°C for 1 hour to form a hard coat layer. The thickness, the state of interference fringes, the appearance (presence or absence of cracks) and scratch resistance were evaluated.

### Examples 2-4 and Comparative Examples 1-4

They were produced using the formulation shown in Table 1, and evaluated in the same manners as in Example 1.

**[Table 1]**

| | | Comparative Ex. 1 | Ex. 1 | Ex. 2 | Ex. 3 | Ex. 4 | Comparative Ex. 2 | Comparative Ex. 3 | Comparative Ex. 4 |
|---|---|---|---|---|---|---|---|---|---|
| Ratio of trifunctional/ bifunctional agents | | 100/0 | 95/5 | 90/10 | 25/75 | 10/90 | 5/95 | 90/10 | 95/5 |
| Component A | A-1 | 16.2 | 16.2 | 16.2 | 16.2 | 16.2 | 16.2 | 16.2 | 16.2 |
| | A-2 | 21.6 | 21.6 | 21.6 | 21.6 | 21.6 | 21.6 | 21.6 | 21.6 |
| Component B | B-1 | 51.8 | 49.2 | - | - - - | 5.2 | 2.6 | - - - | 49.2 |
| | B-2 | - - - | - - - | 55.0 | 15.3 | - - - | - - - | 55.0 | - - - |
| | B-3 | **-** - - | 2.3 | - - - | - - - | 41.7 | 44.1 | - - - | 2.3 |
| | B-4 | - - - | - - - | 5.25 | 39.2 | - - - | - - - | 5.25 | - - - |
| Component C | | 2.5 | 2.5 | 2.5 | 2.5 | 2.5 | 2.5 | 2.5 | 2.5 |
| Component D | | 1.0 | 1.0 | 1.0 | 1.0 | 1.0 | 1.0 | 1.0 | 1.0 |
| Component E | E-1 | 2.1 | 2.1 | 2.1 | 2.1 | 2.1 | 2.1 | 2.1 | - - |
| | E-2 | - - - | - - - | - - - | - - - | - - - | - - - | - - | 10.9 |
| Component F | F-1 | 23.0 | 15.0 | 5.4 | 14.8 | 15.5 | 16.5 | - - - | 15.0 |
| | F-2 | 1.8 | 1.8 | 1.8 | 1.8 | 1.8 | 1.8 | 1.8 | 1.8 |
| | F-3 | - - - | - - - | - - - | - - - | - - - | - - - | 50.0 | - - - |
| Solid Concentration (%) | | 58 | 60 | 58 | 59 | 67 | 65 | 35 | 60 |

**[Table 2]**

| Comparative Ex. 1 | | | | | Ex. 1 | | | | |
|---|---|---|---|---|---|---|---|---|---|
| Refractive Index of Lens | Thickness | Interference Fringe | Appearance | Scrach Resistance | Refractive Index of Lens | Thickness | Interference Fringe | Appearance | Scrach Resistance |
| 1.56 | 20 µm | ○ | ○ | ○ | 1.56 | 19 µm | ○ | ○ | ○ |
| 1.60 | 20 µm | ○ | ○ | ○ | 1.60 | 19 µm | ○ | ○ | ○ |
| 1.67 | 17 µm | ○ | X | ○ | 1.67 | 18 µm | ○ | X | ○ |
| 1.74 | 18 µm | ○ | X | ○ | 1.74 | 19 µm | ○ | ○ | ○ |
| | | | | | | | | | |

| Ex. 2 | | | | | Ex. 3 | | | | |
|---|---|---|---|---|---|---|---|---|---|
| Refractive Index of Lens | Thickness | Interference Fringe | Appearance | Scrach Resistance | Refractive Index of Lens | Thickness | Interference Fringe | Appearance | Scrach Resistance |
| 1.56 | 18 µm | ○ | ○ | ○ | 1.56 | 18 µm | ○ | ○ | ○ |
| 1.60 | 19 µm | ○ | ○ | ○ | 1.60 | 18 µm | ○ | ○ | ○ |
| 1.67 | 17 µm | ○ | ○ | ○ | 1.67 | 17 µm | ○ | ○ | ○ |
| 1.74 | 18 µm | ○ | ○ | ○ | 1.74 | 17 µm | ○ | ○ | ○ |

| | | | | | | | | | |
|---|---|---|---|---|---|---|---|---|---|
| Ex. 4 | | | | | Comnarative Ex. 2 | | | | |
| Refractive Index of Lens | Thickness | Interference Fringe | Appearance | Scrach Resistance | Refractive Index of Lens | Thickness | Interference Fringe | Appearance | Scrach Resistance |
| 1.56 | | | | ○ | 1.56 | 19 µm | ○ | ○ | ○ |
| 1.60 | | | | ○ | 1.60 | 19 µm | ○ | ○ | ○ |
| 1.67 | | | | ○ | 1.67 | 18 µm | ○ | ○ | ○ |
| 1.74 | | | | ○ | 1.74 | 19 µm | ○ | ○ | ○ |
| | | | | | | | | | |

| Comparative Ex. 3 | | | | | Comparative Ex. 4 | | | | |
|---|---|---|---|---|---|---|---|---|---|
| Refractive Index of Lens | Thickness | Interference Fringe | Appearance | Scrach Resistance | Refractive Index of Lens | Thickness | Interference Fringe | Appearance | Scrach Resistance |
| 1.60 | 4 µm | X | ○ | ○ | 1.60 | 18 µm | ○ | ○ | X |
| 1.60 | 12 µm | X | X | ○ | | | | | |

### <Evaluation results>

When the refractive index of the plastic substrate (lens) and the hard coat layer are separated, the interference fringes become more noticeable. However, the interference fringes could be reduced by controlling the film thickness, regardless of the material of the plastic substrate and whether or not the primer layer was formed, even when various lenses with different refractive indices were used. According to the present invention, since bifunctional and trifunctional silane coupling agents are used in combination, even if the thickness of the hard coat layer is increased, the generation of cracks during production can be suppressed.

According to the present invention, an optical article comprising at least a plastic substrate and a hard coat layer formed on the plastic substrate, wherein the plastic substrate has a refractive index of 1.40 to 1.84, the thickness of the hard coat layer is 23 µm or less, preferably in the range of 15 to 20 µm, and the hard coat layer comprises a trifunctional silane coupling agent and a bifunctional silane coupling agent in a solid content ratio of 95:5 to 10:90, preferably 90:10 to 10:90 can be provided. In such an optical article, interference fringes are suppressed, and even if the thickness of the hard coat layer is increased, cracks do not generate during production.

In addition, when the solid content concentration of the coating liquid was 35% (Comparative Example 3), it was difficult to set the film thickness within the proper range (15 µm to 30 µm), and the appearance deteriorated when trying to increase the film thickness forcibly. Therefore, the solid content concentration of the coating liquid is kept within a range of 40 to 70%, preferably 55 to 70%, in order to increase the film thickness, thereby providing an optical article with suppressed interference fringes.

Furthermore, the scratch resistance of the hard coat layer of Comparative Example 4 using itaconic acid was inferior to that of Example 1 using cationic aluminum tris(acetylacetonate) as a curing catalyst. From this, it is found that a cationic curing catalyst is useful for curing the hard coat layer.

### <Evaluation methods>

### (1) Film thickness measurement

Using a reflection spectroscopic film thickness meter FE-3000 manufactured by Otsuka Electronics Co., Ltd., the film thickness of each layer after curing is measured.

### (2) Confirmation of interference fringes

The interference fringes are visually confirmed under a three-wavelength fluorescent light.

In the evaluation criteria, a symbol "O" indicates a passed sample, and a symbol "X" indicates a failed sample.

### (3) Initial appearance

The coating films formed up to the hard coat layer are visually checked to evaluate the generation of cracks.

A symbol "O" indicates a sample without a crack, and a symbol "X" indicates a sample with a crack.

### (4) Scratch resistance test of coating film

A #0000 steel wool is fixed to a steel wool holder of a surface property measuring machine (model number: TYPE14DR, manufactured by Shinto Kagaku Co., Ltd.), a load of 1 kg is applied, and the coating film surface is rubbed back and forth 10 times (hereinafter referred to as a steel wool abrasion test).

A symbol "O" indicates a sample without a scratch, and a symbol "X" indicates a sample with an obvious scratch.

### [Industrial Applicability]

According to the present invention, in an optical article such as a spectacle lens, interference fringes are inconspicuous even when a plastic substrate with a high refractive index is used, and the generation of cracks during production can be suppressed.

## Claims

1. A coating agent composition comprising at least an epoxy resin, a silane coupling agent and silica particles, wherein the silane coupling agent comprising a trifunctional silane coupling agent and a bifunctional silane coupling agent in a solid content ratio of 95:5 to 10:90.

2. The coating agent composition according to claim 1, wherein the solid content concentration is within a range of 40 to 70%.

3. The coating agent composition according to claim 1 or 2, wherein further comprises a cationic curing catalyst.

4. An optical article, wherein a hard coat layer is formed on at least a plastic substrate, the refractive index of the plastic substrate being 1.40 to 1.84, the hard coat which is a curable body of the coating agent composition described in any one of claims 1 to 3 having a thickness of 10 to 23 µm.

5. The optical article according to claim 4, wherein a hard coat layer is formed on at least a primer layer formed on a plastic substrate, the material of the primer layer being selected from a polyurethane-based resin, polyester-based resin, acrylic resin and epoxy resin, and the refractive index being in a range of 1.45 to 1.67.
